# EUROPÄISCHE PATENTSCHRIFT

(11) **EP 3 573 201 B1**
(45) Veröffentlichungstag und Bekanntmachung des Hinweises auf die Patenterteilung: **02.07.2025**
(21) Anmeldenummer: 18173948.3
(22) Anmeldetag: 24.05.2018
(51) Int. Cl.: H02G 3/04

(54) **VORICHTUNG ZUR AUFNAHME VON LEITUNGEN; KABELN ODER STROMLEITENDEN TEILEN**
DEVICE FOR RECEIVING CIRCUITS; CABLES OR ELECTRICALLY CONDUCTING PARTS
DISPOSITIF POUR RECEVOIR DES LIGNES; CABLES OU PIÈCES CONDUCTRICES ELECTRIQUEMENT

(43) Veröffentlichungstag der Anmeldung: 27.11.2019
(73) Patentinhaber: WSF Kunststofftechnik GmbH, 75031 Eppingen-Rohrbach (DE)
(72) Erfinder: Frey, Uwe, 75031 Eppingen-Rohrbach (DE)
(74) Vertreter: Habermann Intellectual Property Partnerschaft von Patentanwälten mbB

(56) Entgegenhaltungen:
- DE-A1- 10 056 441
- DE-U1- 20 021 565
- GB-A- 2 307 111
- GB-A- 2 362 270
- US-A- 4 258 515
- MK ELECTRIC: "MK Product Catalogue cable management", 1 March 2009 (2009-03-01), pages 114 - 187, XP055524303, Retrieved from the Internet <URL:https://www.mkelectric.com/Documents/Middle%20East/MK%20Electric%20Cable%20Management%20Technical%20Brochure%20(Middle%20East).pdf> [retrieved on 20181115]

## Beschreibung

Die Erfindung betrifft eine Vorrichtung zur Aufnahme von Leitungen, Kabeln oder stromleitenden Teilen, umfassend einen länglichen, ein Kabelkanalgehäuse aufweisenden Kabelkanal, der mit Hilfe einer Verschlusseinrichtung verschließbar ist, die mit dem Kabelkanalgehäuse verbunden werden kann, wobei die Vorrichtung folgende Merkmale aufweist:
a) der obere Teil des Kabelkanals ist als Deckel ausgebildet und auf eine Öffnung des Kabelkanalgehäuses aufgesetzt und kann mit Hilfe der Verschlusseinrichtung am Kabelkanalgehäuse gesichert werden;
b) das Kabelkanalgehäuse besteht aus mindestens zwei miteinander verbundenen Schichten;
c) eine erste Schicht ist eine äußere Schicht;
d) eine zweite Schicht ist eine unter der ersten Schicht liegende Schicht;
e) die erste Schicht umgibt die zweite Schicht des Kabelkanalgehäuses;
f) ein Ende der ersten Schicht ist gegen Abheben gesichert und zwischen einer Fläche eines am Deckel vorgesehenen Widerlagers und einer gegenüberliegenden Oberfläche eines Hakens platziert;
g) die erste Schicht umgibt die zweite Schicht des Kabelkanalgehäuses ganz oder zumindest an einigen Seiten;
h) das Kabelkanalgehäuse ist als viereckiges oder mehreckiges Gehäuse ausgebildet, dessen Wandteile allseitig eine durchgehend flache glatte Oberfläche bilden, wobei der Haken und das Widerlager so in die Teile des Kabelkanals eingeformt sind, dass sie an einer äußeren Oberfläche der Wandteile des Kabelkanalgehäuses nicht hervorstehen, wobei die erste Schicht als Dekorschicht ausgebildet ist, wobei die zweite Schicht als den Kabelkanal des Kabelkanalgehäuses umschließende Schicht aus Kunststoff oder zumindest teilweise elastischem Kunststoff gebildet ist.

Es ist bereits ein Kabelkanal aus der EP 3 264 546 A1 bekannt, der eine Abdeckplatte mit einem doppelseitigen Scharnier aufweist, sodass der Kabelkanal von einer Seite geöffnet werden kann, wobei die Abdeckplatte um seine Anschlussstelle am Kabelkanal entweder nach links oder rechts geschwenkt werden kann.

Kabelkanäle werden beispielsweise an Wänden oder Decken befestigt, um Leitungen bzw. Kabel aufzunehmen, so dass diese von außen nicht sichtbar sind. Hierbei werden die Kabelkanäle häufig in Zimmern oder Fluren einer Wohnung oder eines Hauses oder Industriegebäuden verlegt, so dass sie zumindest teilweise sichtbar sind.

Weiterhin ist bekannt, fertig verlegte Kabelkanäle mit einer Dekorfolie zu bekleben, um ein ansprechendes Äußeres des Kabelkanals zu erhalten. Dabei entstehen beim Verkleben der Dekorfolie jedoch häufig Falten oder unsaubere Abschlüsse, oder es ergeben sich Fugen am Übergang zwischen dem Kanalgrundelement und dem Deckelelement, so dass ein ansprechendes Aussehen nur bedingt erreicht werden kann.

Ferner ist aus der DE 200 21 565 U1 ein Kabelkanal zur Aufnahme von Kabeln oder Leitungen über Putz bekannt, welcher ein im Schnitt im Wesentlichen U-förmiges Kanalgrundelement und ein Deckelelement aufweist. Das Deckelelement ist ebenfalls im Wesentlichen U-förmig mit einer Basisfläche und zwei Seitenflächen ausgebildet. Die beiden Seitenflächen und die Basisfläche des Deckelelements decken im montierten Zustand das Kanalgrundelement vollständig ab, wobei das Kanalgrund-element mit seiner Basisfläche z. B. an einer Wand befestigt ist. Die Seitenflächen des Deckelelements weisen eine Höhe auf, welche größer als die Höhe der Seitenflächen des Kanalgrund-elements ist. Der offene Bereich des Kanalgrundelements wird durch die Basisfläche des Deckelements abgedeckt, so dass das Deckelelement vollständig drei Seiten des Kanalgrundelements abdeckt. Somit ist das Kanalgrundelement in montiertem Zustand vollständig von dem Deckelelement umgeben. Dadurch soll es möglich sein, das Deckelelement in bestimmten gewünschten Farben herzustellen, wohingegen das Kanalgrundelement immer in der gleichen Farbe bzw. farblos hergestellt wird. Dies ermöglicht es beispielsweise, dass das im montierten Zustand nicht sichtbare Kanalgrundelement aus recycelten Kunststoffen hergestellt wird.

Die Patentanmeldung GB 2 362 270 A zeigt einen Kabelkanal mit einem Kanalgrundelement und einem Deckel. Der Deckel besteht dabei aus einer Schicht und kann ohne die Verwendung von Schrauben an dem Kanalgrundelement festgelegt werden.

Der Erfindung liegt die Aufgabe zugrunde, die Vorrichtung zur Aufnahme von Leitungen, Kabeln oder stromleitenden Teilen durch die Verwendung von zwei unterschiedlichen Schichten kostengünstig auszubilden, um insbesondere die erste Schicht in verschiedenem Design auszugestalten und auf eine Erdung zu verzichten.

Die Aufgabe wird erfindungsgemäß dadurch gelöst, dass die erste Schicht als Metallband ausgebildet ist.

Das Kabelkanalgehäuse wird durch die beiden Schichten gebildet. Die Schichten sind Wandteile.

Eine zusätzliche Möglichkeit ist gemäß einer Weiterbildung der Erfindung, dass die erste Schicht an ihren Enden in vorteilhafter Weise gesichert ist, sodass sich die Enden der ersten Schicht auch bei starker Belastung nicht von der zweiten Schicht lösen können.

Kunststoffkabelkanäle sind in der Regel günstig, werden bisher aber nur in wenigen Farben angeboten. Höherwertige Kabelkanäle aus Aluminium und aus Edelstahl bieten vom Design her zwar weitere Möglichkeiten, sind aber viel teurer als gleich große Kunststoffkabelkanäle und sie müssen nicht geerdet werden.

Durch die Kombination von Kunststoff als Trägermaterial und einem außen angebrachten Metallband aus Aluminium oder Edelstahl, lassen sich die Vorzüge beider Produkte vorteilhaft kombinieren.

Erfindungsgemäß ist es auf einfache Weise möglich, an der Oberfläche des Kabelkanals Metallbänder vorzusehen, die optisch mit verschiedenem Design ausgestattet sind, oder auch die Funktion als UV-Schutz übernehmen, wenn die Kabelkanäle im Außenbereich eingesetzt werden. Edelstahl eignet sich insbesondere im Hygienebereich

Vorteilhaft ist es daher, dass das Kabelkanalgehäuse zur Aufnahme des Kabels aus Kunststoff und die Außenseite aus Metall besteht, diese Werkstoffkombination ist nicht nur kostengünstig, sondern, wie bereits erwähnt, vielseitig einsetzbar. Die Unterseite des Kabelkanalgehäuses muss nicht unbedingt mit einem Metall ummantelt sein, da diese Fläche später zur Montage verwendet werden soll. Der Boden des Kabelkanalgehäuses kann wahlweise mit oder ohne Klebebänder ausgerüstet werden, je nach Wunsch des Anwenders. Ebenso kann das Kabelkanalgehäuse wahlweise mit oder ohne Stanzlöcher versehen werden, um später eine Befestigung über Fügetechnik, wie Verschraubung, zu erlauben.

Ferner ist es erfindungsgemäß und vorteilhaft, dass die zweite Schicht aus Kunststoff oder zumindest teilweise elastischem Kunststoff gebildet ist.

Erfindungsgemäß ist es auch, dass ein Teil des Kabelkanals als Deckel ausgebildet ist, der auf die Öffnung des Kabelkanalgehäuses mit Hilfe der Verschlusseinrichtung am Kabelkanalgehäuses gesichert werden kann.

Von besonderer Bedeutung ist für die vorliegende Erfindung, dass die Verschlusseinrichtung aus einem teilweise elastisch ausgebildeten Haken und einem Widerlager besteht, die miteinander fest verbindbar sind, wobei ein Teil der Verschlusseinrichtung am Deckel und der andere Teil am Kabelkanalgehäuse befestigt oder diesem angeformt sein kann.

Auch ist es vorteilhaft, dass der Fuß oder die Anschlussstelle des Hakens an einem Wandteil des Kabelkanalgehäuses elastisch, als Gelenkstelle oder derart verstellbar ausgebildet ist, dass beim Schließen des Deckels am Kabelkanalgehäuse ein Teil des Hakens durch Anlage an einer geneigt verlaufenden Führungsfläche etwas zurückgebogen und an dieser entlanggeführt wird, bis er hinter der Führungsfläche mit Hilfe seiner Federkraft in eine Aussparung eingeführt und gegen das Widerlager gepresst wird und somit den Deckel am Kabelkanalgehäuse sichert.

Ferner ist es vorteilhaft, dass beide Verschlusseinrichtungen jeweils in einem Eckbereich des Kabelkanalgehäuses vorgesehen sind.

Erfindungsgemäß ist es auch, dass das Kabelkanalgehäuse als viereckiges oder mehreckiges Gehäuse ausgebildet ist, dessen Wandteile allseitig eine durchgehend flache glatte Oberfläche bilden, wobei der Haken und das Widerlager so in die Teile des Kabelkanalgehäuses eingeformt sind, dass sie an der äußeren Oberfläche der Wandteile des Kabelkanalgehäuses nicht hervorstehen.

Weitere Vorteile und Einzelheiten der Erfindung sind in den Patentansprüchen und in der Beschreibung erläutert und in den Figuren dargestellt.

Dabei zeigen:
- Fig. 1: eine perspektivische Darstellung eines Kabelkanals;

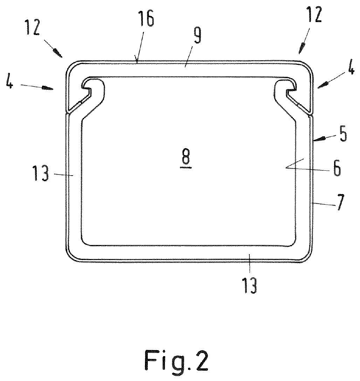

- Fig. 2: eine Schnittdarstellung des Kabelkanals, gemäß Fig. 1;
- Fig. 3: eine Teilansicht der Verschlusseinrichtung des Deckels im Schnitt.

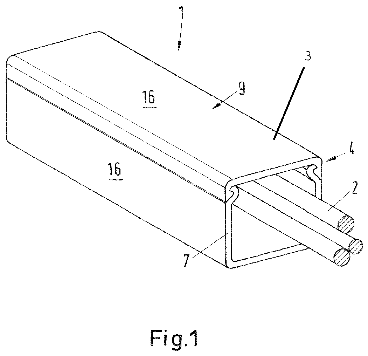

In Fig. 1 ist eine Vorrichtung 1 zur Aufnahme von Leitungen, Kabeln 2 oder stromleitenden Teilen in einem länglichen, ein Kabelkanalgehäuse 7 aufweisenden Kabelkanal 3 dargestellt, die mit Hilfe einer Verschlusseinrichtung 4 verschließbar ist, die mit dem Kabelkanalgehäuse 7 verbunden werden kann.

Das Kabelkanalgehäuse 7 besteht aus mindestens zwei mit einander verbundenen Schichten, wobei die erste Schicht 5 die zweite Schicht 6 des Kabelkanalgehäuses 7 zumindest an einigen Seiten oder auch ganz umgibt. Die untere Seite muss nur in bestimmten Fällen mit einer zweiten Schicht 6 versehen sein.

Die erste Schicht 5 kann als Werbeträger oder Dekorschicht ausgebildet sein. Deshalb ist es erfindungsgemäß und vorteilhaft, dass die erste Schicht 5 als Metallband ausgebildet ist.

Die zweite und den Kabelkanal 3 des Kabelkanalgehäuses 7 umschließende Schicht 6 ist aus Kunststoff oder zumindest teilweise elastischem Kunststoff gebildet und dient zur Aufnahme von Kabeln oder anderen länglichen Teilen. Die zweite Schicht 6 kann auch als Isolierschicht dienen.

Ein Teil, insbesondere der obere Teil des Kabelkanals 3 7, ist als Deckel 9 ausgebildet, der auf die Öffnung des Kabelkanalgehäuses 7 aufgesetzt werden kann und mit Hilfe einer oder zwei Verschlusseinrichtungen 4 am Kabelkanalgehäuse 7 gesichert werden kann, wenn, wie zuvor erwähnt, die Kabel in das Kabelkanalgehäuse 7 verlegt worden sind.

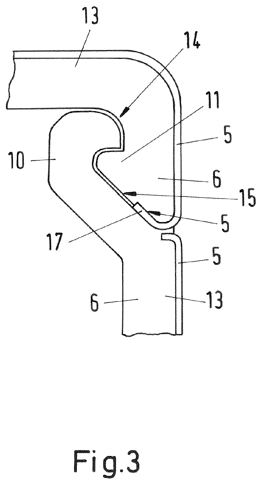

Die Verschlusseinrichtung 4 besteht aus einem teilweise elastisch ausgebildeten Haken 10 und einem Widerlager 11, die miteinander fest verbindbar sind. Der Haken ist gemäß Fig. 3 an ein aufrecht stehendes Wandteil 13 geformt und nach innen bzw. in das Gehäuseinnere abgewinkelt. Der schrägverlaufende Teil des Hakens bildet eine Führungsfläche 15, gegen die sich die gegenüberliegende Seite eines Teils des Widerlagers 11 anlegen kann, wenn der Deckel 9 auf das Kabelkanalgehäuse 7 gesetzt wird.

Der Fuß oder die Anschlussstelle des Hakens 10 ist an das Wandteil 13 des Kabelkanalgehäuses 7 elastisch angeschlossen, oder als Gelenkstelle derart verstellbar ausgebildet, dass beim Schließen des Deckels 9 am Kabelkanalgehäuse 7 ein Teil des Hakens 10 durch Anlage an einer geneigt verlaufenden Führungsfläche 15 etwas zurückgebogen und an dieser entlanggeführt wird, bis er hinter der Führungsfläche 15 mit Hilfe seiner Federkraft in eine Aussparung 14 eingeführt und gegen das Widerlager gepresst wird und somit den Deckel 9 am Kabelkanalgehäuse 7 sichert.

Beide Verschlusseinrichtungen 4 sind jeweils in einem Eckbereich 12 des Kabelkanalgehäuses 7 vorgesehen.

Das Kabelkanalgehäuse 7 kann ein rundes, ovales viereckiges oder mehreckiges Gehäuse ausgebildet sein, dessen Wandteile 13 allseitig eine durchgehend flache glatte Oberfläche 16 bilden, wobei der Haken 10 und das Widerlager 11 so in die Teile des Kabelkanalgehäuses 7 eingeformt sind, dass sie an der äußeren Oberfläche 16 der Wandteile 13 des Kabelkanalgehäuses 7 nicht hervorstehen. Hierdurch ist es ohne weiteres möglich, alle äußeren Flächen als Dekorflächen einzusetzen.

Damit ein Ende 17 der ersten Schicht 5 gegen Abheben gesichert ist, kann das untere freie Ende der ersten Schicht 5 zwischen der Führungsfläche 15 des Widerlagers 11 und der gegenüberliegenden Oberfläche des Hakens 10 platziert werden.

### Bezugszeichenliste

- 1: Vorrichtung
- 2: Leitung, Kabel
- 3: Kabelkanal
- 4: Verschlusseinrichtung
- 5: erste Schicht, Metallband, Dekorschicht
- 6: zweite Schicht
- 7: Kabelkanalgehäuse
- 8: Kabelkanal
- 9: Deckel
- 10: Haken
- 11: Widerlager
- 12: Eckbereich
- 13: Wandteil
- 14: Aussparung
- 15: Führungsfläche
- 16: flache glatte Oberfläche
- 17: Ende der ersten Schicht

## Patentansprüche

1. Vorrichtung (1) zur Aufnahme von Leitungen, Kabeln (2) oder stromleitenden Teilen, umfassend einen länglichen, ein Kabelkanalgehäuse (7) aufweisenden Kabelkanal (3), der mit Hilfe einer Verschlusseinrichtung (4) verschließbar ist, die mit dem Kabelkanalgehäuse (7) verbunden werden kann, wobei die Vorrichtung (1) folgende Merkmale aufweist:
a) der obere Teil des Kabelkanals (3) ist als Deckel (9) ausgebildet und auf eine Öffnung des Kabelkanalgehäuses (7) aufgesetzt und kann mit Hilfe der Verschlusseinrichtung (4) am Kabelkanalgehäuse (7) gesichert werden;
b) das Kabelkanalgehäuse besteht aus mindestens zwei miteinander verbundenen Schichten (5, 6);
c) eine erste Schicht (5) ist eine äußere Schicht;
d) eine zweite Schicht (6) ist eine unter der ersten Schicht (5) liegende Schicht;
e) die erste Schicht (5) umgibt die zweite Schicht (6) des Kabelkanalgehäuses (7);
f) ein Ende (17) der ersten Schicht (5) ist gegen Abheben gesichert und zwischen einer Fläche eines am Deckel (9) vorgesehenen Widerlagers (11) und einer gegenüberliegenden Oberfläche eines Hakens (10) platziert;
g) die erste Schicht (5) umgibt die zweite Schicht (6) des Kabelkanalgehäuses (7) ganz oder zumindest an einigen Seiten;
h) das Kabelkanalgehäuse (7) ist als viereckiges oder mehreckiges Gehäuse ausgebildet, dessen Wandteile (13) allseitig eine durchgehend flache glatte Oberfläche (16) bilden, wobei der Haken (10) und das Widerlager (11) so in die Teile des Kabelkanals (3) eingeformt sind, dass sie an einer äußeren Oberfläche (16) der Wandteile (13) des Kabelkanalgehäuses (7) nicht hervorstehen, wobei die erste Schicht (5) als Dekorschicht ausgebildet ist, wobei die zweite Schicht (6) als den Kabelkanal (3) des Kabelkanalgehäuses (7) umschließende Schicht aus Kunststoff oder zumindest teilweise elastischem Kunststoff gebildet ist, **dadurch gekennzeichnet, dass** die erste Schicht (5) als Metallband ausgebildet ist.

2. Vorrichtung nach ein Anspruch 1, **dadurch gekennzeichnet, dass** Haken (10) teilweise elastisch ausgebildet ist, wobei ein Teil der Verschlusseinrichtung (4) am Deckel (9) und der andere Teil am Kabelkanalgehäuse (7) befestigt oder diesem angeformt ist.

3. Vorrichtung nach einem der Ansprüche 1 oder 2, **dadurch gekennzeichnet, dass** der Fuß oder die Anschlussstelle des Hakens (10) an einem Wandteil (13) des Kabelkanalgehäuses (7) elastisch, als Gelenkstelle oder derart verstellbar ausgebildet ist, dass beim Schließen des Deckels (9) am Kabelkanalgehäuse (7) ein Teil des Hakens (10) durch Anlage an einer geneigt verlaufenden Führungsfläche (15) etwas zurückgebogen und an dieser entlanggeführt wird, bis er hinter der Führungsfläche (15) mit Hilfe seiner Federkraft in eine Aussparung (14) eingeführt und gegen das Widerlager gepresst wird und somit den Deckel (9) am Kabelkanalgehäuse (7) sichert.

4. Vorrichtung nach einem der vorhergehenden Ansprüche, **dadurch gekennzeichnet, dass** die Verschlusseinrichtungen (4) jeweils in einem Eckbereich (12) des Kabelkanalgehäuses (7) vorgesehen ist.

5. Vorrichtung nach einem der vorhergehenden Ansprüche, **dadurch gekennzeichnet, dass** ein Ende (17) der ersten Schicht oder des Metallbands (5) das Ende des Widerlagers (11) ummantelt und zwar zwischen der Führungsfläche (15) des Widerlagers (11) und der gegenüberliegenden Oberfläche des Hakens (10).

## Claims

1. Device (1) for accommodating lines, cables (2) or current-conducting parts, comprising an elongate cable duct (3) having a cable duct housing (7), which duct is closable using a closure device (4) that is connectable to the cable duct housing (7); wherein the device (1) comprises the following features:
a) the upper part of the cable duct (3) is configured as a lid (9) and placed onto an opening of the cable duct housing (7) and can be secured on the cable duct housing (7) using the closure device (4);
b) the cable duct housing consists of at least two layers (5, 6) that are connected to one another;
c) a first layer (5) is an outer layer;
d) a second layer (6) is a layer located underneath the first layer (5);
e) the first layer (5) encloses the second layer (6) of the cable duct housing (7);
f) an end (17) of the first layer (5) is secured against detaching and is placed between a face of an abutment (11) provided on the lid (9) and an opposite surface of a hook (10);
g) the first layer (5) encloses the second layer (6) of the cable duct housing (7) entirely or at least on some sides;
h) the cable duct housing (7) is configured as a quadrangular or polygonal housing, the wall parts (13) of which form a continuous, flat, smooth surface (16) on all sides, wherein the hook (10) and the abutment (11) are molded into the parts of the cable duct (3) in such a way that they do not protrude from an outer surface (16) of the wall parts (13) of the cable duct housing (7), wherein the first layer (5) is designed as a decorative layer, wherein the second layer (6) is designed as a layer enclosing the cable duct (3) of the cable duct housing (7) and formed of synthetic material or at least partially elastic synthetic material,
**characterized in that** that the first layer (5) is designed as a metal strip.

2. Device according to Claim 1, **characterized in that** the hook (10) is at least in part configured elastically, wherein one part of the closure device (4) is fastened on the lid (9) and the other part is fastened to the cable duct housing (7) or molded thereto.

3. Device according to any one of claims 1 or 2, **characterized in that** the foot or connection point of the hook (10) on a wall part (13) of the cable duct housing (7) is designed to be elastic, as a joint location or designed adjustable in such a way that when the lid (9) on the cable duct housing (7) is closed, a part of the hook (10) is bent back slightly by contact with an inclined guide surface (15) and guided along this surface until it is introduced into a recess (14) behind the guide surface (15) with the aid of its spring force and pressed against the abutment, thus securing the lid (9) to the cable duct housing (7).

4. Device according to any one of the preceding claims, **characterized in that** the closure devices (4) are each provided in a corner area (12) of the cable duct housing (7).

5. Device according to any one of the preceding claims, **characterized in that** an end (17) of the first layer or of the metal band (5) sheaths the end of the abutment (11), precisely between the guide surface (15) of the abutment (11) and the opposite surface of the hook (10).

## Revendications

1. Dispositif (1) pour la réception de lignes, de câbles (2) ou de pièces conductrices de courant, comprenant un canal de câbles (3) allongé, présentant un boîtier de canal de câbles (7), qui peut être fermé à l'aide d'un appareil de fermeture (4) qui peut être relié au boîtier de canal de câbles (7), le dispositif (1) présentant les caractéristiques suivantes :
a) la partie supérieure du canal de câbles (3) est réalisée sous forme de couvercle (9) et est placée sur une ouverture du boîtier du canal de câbles (7) et peut être sécurisée au boîtier de canal de câbles (7) à l'aide de l'appareil de fermeture (4) ;
b) le boîtier de canal de câbles est constitué d'au moins deux couches (5, 6) reliées entre elles ;
c) une première couche (5) est une couche extérieure ;
d) une deuxième couche (6) est une couche sous-jacente à la première couche (5) ;
e) la première couche (5) entoure la deuxième couche (6) du boîtier de canal de câbles (7) ;
f) une extrémité (17) de la première couche (5) est sécurisée pour ne pas se soulever et est placée entre une surface d'un contre-appui (11) prévu sur le couvercle (9) et une surface opposée d'un crochet (10) ;
g) la première couche (5) entoure entièrement ou au moins sur certains côtés la deuxième couche (6) du boîtier de canal de câbles (7) ;
h) le boîtier de canal de câbles (7) est réalisé sous forme de boîtier quadrangulaire ou polygonal dont les parties de paroi (13) forment de tous côtés une surface (16) lisse plate continue, le crochet (10) et le contre-appui (11) étant formés dans les parties du canal de câbles (3) de telle sorte qu'ils ne dépassent pas sur une surface extérieure (16) des parties de paroi (13) du boîtier de canal de câbles (7), la première couche (5) étant réalisée sous forme de couche décorative, la deuxième couche (6) étant réalisée sous forme de couche entourant le canal de câbles (3) du boîtier de canal de câbles (7), en matière plastique ou en matière plastique au moins partiellement élastique, **caractérisé en ce que** la première couche (5) est réalisée sous forme de bande métallique.

2. Dispositif selon la revendication 1, **caractérisé en ce que** le crochet (10) est réalisé sous forme partiellement élastique, une partie de l'appareil de fermeture (4) étant fixée au couvercle (9) et l'autre partie étant fixée au boîtier de canal de câbles (7) ou formée sur celui-ci.

3. Dispositif selon l'une quelconque des revendications 1 ou 2, **caractérisé en ce que** le pied ou le point de raccordement du crochet (10) sur une partie de paroi (13) du boîtier de canal de câbles (7) est réalisé sous forme élastique, sous forme de point articulé ou sous forme réglable de telle manière que, lors de la fermeture du couvercle (9) sur le boîtier de canal de câbles (7), une partie du crochet (10) est légèrement repliée en arrière en s'appuyant sur une surface de guidage (15) inclinée et est guidée le long de celle-ci jusqu'à ce qu'elle soit introduite derrière la surface de guidage (15) à l'aide de sa force de ressort dans un évidement (14) et pressée contre le contre-appui et sécurise ainsi le couvercle (9) sur le boîtier de canal de câbles (7).

4. Dispositif selon l'une quelconque des revendications précédentes, **caractérisé en ce que** les appareils de fermeture (4) sont prévus chacun dans une zone de coin (12) du boîtier de canal de câbles (7).

5. Dispositif selon l'une quelconque des revendications précédentes, **caractérisé en ce qu'**une extrémité (17) de la première couche ou de la bande métallique (5) enveloppe l'extrémité du contre-appui (11), et ce entre la surface de guidage (15) du contre-appui (11) et la surface opposée du crochet (10).
